# FASCICULE DE BREVET EUROPEEN

(11) **EP 1 567 911 B1**
(45) Date de publication et mention de la délivrance du brevet: **24.02.2016**
(21) Numéro de dépôt: 03799527.1
(22) Date de dépôt: 02.12.2003
(51) Int. Cl.: G02F 1/1362

(54) **STRUCTURE DE MATRICE ACTIVE POUR ECRAN DE VISUALISATION ET ECRAN COMPORTANT UNE TELLE MATRICE**
AKTIVMATRIXSTRUKTUR FÜR EINEN ANZEIGESCHIRM UND EINE SOLCHEMATRIX UMFASSENDER SCHIRM
ACTIVE MATRIX STRUCTURE FOR DISPLAY SCREEN AND SCREEN COMPRISING ONE SUCH MATRIX

(30) Priorité: 03.12.2002 FR 0215484
(43) Date de publication de la demande: 31.08.2005
(73) Titulaire: Thomson Licensing, 92130 Issy-les-Moulineaux (FR)
(72) Inventeur: KRETZ, Thierry, F-94117 Arcueil (FR); LEBRUN, Hugues, F-94117 Arcueil (FR)
(74) Mandataire: Esselin, Sophie
(86) Numéro de dépôt international: PCT/EP2003/050918
(87) Numéro de publication internationale: WO 2004/051356

(56) Documents cités:
- US-A- 4 961 630
- US-A- 5 286 983
- US-A- 5 835 170
- TAKASHI SUGAWARA ET AL: "LIQUID-CRYSTAL 1.8-IN. DISPLAYS USING POLY-SI THIN-FILM TRANSISTORSWITH NOVEL STRUCTURE AND A STORAGE-CAPACITANCE ARRANGEMENT" OPTICAL ENGINEERING, SOC. OF PHOTO-OPTICAL INSTRUMENTATION ENGINEERS. BELLINGHAM, US, vol. 33, no. 11, 1 novembre 1994 (1994-11-01), pages 3683-3688, XP000475112 ISSN: 0091-3286

## Description

La présente invention se rapporte aux écrans à affichage matriciel, et plus particulièrement à une structure de matrice active d'éléments pixels offrant à la fois une grande capacité de stockage sur chaque électrode pixel et un taux d'ouverture élevé. Le domaine de l'invention est celui des matrices actives formées sur un substrat transparent.

Un écran à affichage matriciel est habituellement formé de deux substrats transparents, par exemple en verre, se faisant face, scellés l'un à l'autre par un joint périphérique de façon à ménager une cavité dans laquelle se trouve le matériau d'affichage tel que des cristaux liquides ou des diodes électroluminescentes en matériau organique (OLEDs selon la terminologie anglo-saxonne). Le premier substrat est revêtu d'une contre-électrode, commune à toute la matrice, reliée à un potentiel de référence. Dans le cas d'un écran couleur, ce substrat comporte en outre une matrice de filtres colorés (typiquement, filtres rouges, verts et bleus). Le deuxième substrat comprend les électrodes pixel, arrangées matriciellement en lignes et colonnes. Dans le cas de matrices actives, le deuxième substrat comprend encore des dispositifs de commutation tel qu'un transistor ou une diode, avec un dispositif pour chaque électrode pixel. Chaque dispositif de commutation est connecté à une ligne et à une colonne de la matrice par lesquelles une donnée d'affichage peut être appliquée sélectivement (adressage matriciel) sur l'électrode pixel correspondante.

La structure formée par l'élément pixel, la portion de contre-électrode en regard et le diélectrique entre, définit une capacité pixel. Cette capacité pixel a une faible valeur. Pour cette raison, une capacité de stockage séparée est prévue dans la structure, associée à chaque électrode pixel, pour maintenir le niveau de tension appliqué sur l'électrode pixel par le dispositif de commutation associé, tout le temps de chaque trame de balayage. Selon le niveau de tension appliqué sur l'électrode pixel, par rapport au niveau de référence de la contre-électrode, on obtient à l'emplacement correspondant sur l'écran un point image blanc (ou vert, rouge ou bleu, dans le cas d'un écran avec filtres couleurs) ou un point image noir.

Le rafraîchissement des images sur l'écran est obtenu selon un mode de balayage de trame : les rangées d'éléments pixel sont sélectionnées tour à tour au moyen d'un signal de balayage appliqué successivement sur chacune des lignes de sélection de rangées de la matrice et les données d'affichage correspondant à chaque rangée sont appliquées sur les colonnes. L'application du signal de balayage de trame sur une ligne a pour effet de rendre passant les dispositifs de commutation de la rangée associée. Chacun de ces dispositifs commute alors la donnée d'affichage appliquée sur la colonne associée, typiquement un niveau de tension, sur l'électrode pixel associée. Le niveau de tension sur l'électrode pixel, doit être maintenu sans pertes, tout le temps de la trame. Or les courants de fuite des transistors à l'état bloqué, et les capacités parasites avec les lignes et les colonnes sont autant de facteurs qui entraînent une décharge de la capacité pixel. On a vu qu'une capacité de stockage séparée avec une valeur adaptée était ainsi prévue, associée à l'électrode pixel, pour cette fonction, dans le but d'obtenir un contraste d'image aussi bon que possible et de réduire les phénomènes de papillotements.

Selon un état de la technique comme décrit par exemple dans l'article intitulé *"*Driving method for gate-delay compensation of TFT/LCD" de K.Kusafuka, H. Shimizu, S.Kimura, paru dans IBM J. Res. Develop. Vol.42 N0.3/4 May/july 1998, une capacité de stockage est habituellement réalisée entre l'électrode pixel et la ligne de sélection de la rangée de pixels précédente. Dans une matrice à éléments de commutation de type transistors, la ligne de sélection réalise la grille des transistors de la rangée, d'où l'appellation "capacité de stockage de grille" (*capacitor on gate* dans la littérature anglo-saxonne), pour cette capacité de stockage réalisée avec cette ligne de sélection. Cependant, avec de telles structures de capacité de stockage, le métal, opaque, de la ligne de sélection empiète sur la surface de l'électrode pixel, ce qui a pour effet de diminuer le taux d'ouverture OAR des pixels (*Open Aperture Ratio*)*.* En pratique, un compromis doit être fait entre la valeur de capacité de stockage que l'on cherche à obtenir et la dégradation du taux d'ouverture des éléments pixel qui serait acceptable. Cette solution s'avère mal adaptée pour les écrans dits haute résolution, pour lesquels les éléments pixels sont déjà de faibles dimensions.

Selon un autre état de la technique, la capacité de stockage peut être réalisée par un plan de masse enterré sous la matrice d'éléments pixel, comme par exemple décrit dans le brevet européen N°0 607 352 (92 922674.4). Une couche en matériau conducteur et transparent, tel que de l'oxyde d'indium et d'étain (ITO) est ainsi réalisée sur toute la surface du substrat, de préférence par-dessus une première couche en matériau opaque conducteur ou non, qui forme écran (*light shield*)*.* Le motif de cette couche opaque est réalisé pour masquer toutes les parties hors de la zone utile d'ouverture des pixels, typiquement les lignes de sélection et les lignes de données, de manière à écranter les lignes de champ des capacités parasites planaires (capacités parasites entre l'électrode pixel et les lignes et les colonnes).

La structure de la matrice active comprenant les éléments de commutation, typiquement des transistors ou des diodes, et les électrodes pixel, est ensuite réalisée selon les procédés technologiques habituels.

La capacité de stockage de chaque élément pixel est alors réalisée à 90% par la structure capacitive entre l'électrode pixel et la portion de plan de masse enterré en regard, et à 10% par la portion de ligne de sélection de la rangée précédente en regard de l'électrode pixel.

Le plan de masse enterré est connecté à un potentiel de référence, typiquement le potentiel de la contre-électrode, au moyen d'un plot de contact externe.

Pour certaines applications des écrans à matrice active, on cherche cependant à réduire les contraintes de connexion externe. La nécessité de connecter le plan de masse à un potentiel de référence apparaît alors comme une contrainte. En effet, des problèmes de croisement avec les autres signaux externes se posent, notamment les signaux de balayage, ce qui rend plus complexe la conception du schéma d'implantation.

Enfin, malgré les couches d'isolant prévues dans la structure de la matrice (en général trois) entre les différents niveaux conducteurs, et selon les technologies de fabrication utilisées, il peut se produire en pratique des courts-circuits entre le plan de masse et les différents niveaux conducteurs de la structure, dus à des poussières ou des impuretés : court-circuits avec les lignes de sélection ou l'électrode pixel. Les électrodes pixel concernées sont alors court-circuitées au potentiel de la contre-électrode : ces pixels apparaissent donc blancs (ou bien rouges, verts ou bleus, dans le cas d'un écran couleur). Ces défauts visibles affectent le rendement de fabrication.

Une autre structure de matrice active pour écran de visualisation est également connue du brevet US 5,286,983.

Un objet de l'invention est de proposer une nouvelle structure de matrice d'écrans de visualisation qui permette de satisfaire aux critères de qualité d'image malgré une taille réduite des éléments pixels sans ajouter de contraintes de connexion externe et tout en gardant une bonne qualité optique, notamment un taux d'ouverture élevé pour chaque pixel.

Un autre objet de l'invention est une nouvelle structure de la matrice, par laquelle, en cas de court-circuits des éléments pixel avec la capacité de stockage, on ait par construction un noircissement automatique des points image concernés.

Un autre objet de l'invention, est une nouvelle de structure de la matrice, par laquelle les court-circuits entre le plan de masse et les lignes ne soient plus une cause de mise au rebut de la matrice.

L'idée à la base de l'invention est d'utiliser le principe du plan de masse, c'est à dire une couche spécialisée dans la structure de la matrice, mais structurée en larges bus disposés sous les rangées d'électrodes pixel, sensiblement de même largeur que ces rangées, chacun de ces bus étant contrôlé par la ligne de sélection d'une rangée précédente.

Plus particulièrement la structure de matrice selon l'invention comprend alors une couche d'un matériau conducteur transparent, disposée dans la structure sur un niveau séparé du niveau des lignes de sélection de rangée et du niveau des électrodes pixels par une couche d'isolant au moins. Les bus sont disposés de façon parallèle aux lignes de sélection des rangées, et entre ces lignes, sous les rangées d'électrodes pixel, sensiblement de même largeur que les électrodes pixels. Pour chaque élément pixel, on obtient une valeur de capacité de stockage optimum, car la partie du bus en regard de chaque électrode pixel couvre sensiblement toute la surface de cette électrode. Chacun des bus formant une électrode de la capacité de stockage des pixels de la rangée associée est commandé par une ligne de sélection d'une rangée précédente. Aucune connexion externe supplémentaire n'est nécessaire.

Ainsi, telle que revendiquée l'invention concerne une structure de matrice active pour écran de visualisation, formée sur un substrat transparent, comprenant des électrodes pixels disposées en rangées et colonnes, un dispositif de commutation associé à chaque électrode, et des lignes de sélection de rangée correspondantes, chaque ligne de sélection étant disposée entre deux rangées d'électrodes pixel successives, les lignes de sélection et les électrodes pixel étant réalisées sur un niveau différent dans la structure.

Selon l'invention, cette structure comprend sous chaque rangée d'électrodes pixel, un bus en matériau conducteur et transparent, sensiblement de même largeur que ladite rangée, réalisé sur un niveau de la structure séparé du niveau des lignes de sélection et du niveau des électrodes pixels par au moins une couche d'isolant et connecté à la ligne de sélection d'une rangée de pixel précédente, ledit bus formant une capacité de stockage avec chaque électrode pixel de ladite rangée.

Le matériau conducteur utilisé est généralement de l'ITO. Le bus de stockage a une résistance d'accès élevée. Elle peut être abaissée si on double cette couche, d'une couche opaque en titane, servant de masque optique (Light Shield), dont la résistance par carré est faible.

La connexion du bus de stockage d'une rangée à une ligne de sélection précédente permet de maintenir la charge sur la capacité de stockage associée à chaque électrode pixel à une valeur stable de référence; ce qui permet d'assurer la charge de l'électrode pixel de la rangée à la bonne tension vidéo.

Cette structure s'applique notamment à des matrices actives du type transistors à couches minces.

Cette structure selon l'invention permet notamment l'utilisation de dispositifs de commande des lignes de sélection par des signaux d'impulsions à plusieurs niveaux qui permettent de compenser les différentes perturbations désignées par le terme anglo-saxon de *"gate de*/*ay",* liées aux capacités parasites du transistor et aux capacités parasites planaires entre l'électrode pixel et les lignes et colonnes voisines, y compris les variations de ces couplages en fonction des caractéristiques du matériau électro-optique utilisé (cristaux liquides) qui varient avec les conditions d'utilisation, par exemple avec la température. L'article précité *"Driving method for gate-delay compensation of TFTlLCD"* décrit de telles formes de signaux de type impulsionnel, par lesquels les qualités optiques sont améliorées. Pour des structures de matrice active utilisant des transistors comme dispositifs de commutation, un perfectionnement de l'invention consiste à conformer chacun des bus de capacité de stockage en sorte qu'ils forment une deuxième grille pour chaque transistor de la rangée d'éléments pixels associée. Le bus de capacité de stockage est alors réalisé sur un niveau de la structure tel que cette deuxième grille et la grille principale des transistors, formée par les lignes de sélection de rangée, se trouve de part et d'autre du canal des transistors. On obtient alors une structure de transistor de commutation à double grille.

Par cette deuxième grille qui suit le niveau de tension de la ligne de sélection de la rangée précédente, on améliore la commande à l'état bloqué des transistors de la rangée courante : les courants de fuite sont notamment limités toute la durée du temps de trame qui suit la sélection de la rangée courante, lorsque les niveaux de tension ont été chargés sur les électrodes pixel et les capacités de stockage associées, ce qui contribue à améliorer le maintien de la charge sur les électrodes pixels, et donc, la qualité de l'image.

Selon un autre aspect de l'invention, un avantage supplémentaire de précharge de grille peut encore être obtenu de cette structure de transistors à double grille selon l'invention, en assurant une logique de connexion judicieuse des bus de capacité de stockage avec les lignes de sélection de rangée, en fonction du mode d'adressage de l'écran : inversion trame, inversion ligne, double ligne.

Ainsi, avec une structure de matrice selon l'invention comprenant un bus de capacité de stockage sous chaque rangée d'électrodes pixel selon l'invention, on améliore le rendement de fabrication de la matrice, la valeur de la capacité de stockage, mais aussi la commande des pixels. La qualité optique des écrans qui utilisent de telles matrices s'en trouve améliorée.

De préférence, la connexion de ces bus à la ligne de sélection de rangée associée se fait à l'extérieur de la matrice active, à au moins une extrémité. La connexion de la ligne précédente aux deux extrémités du bus procure l'avantage supplémentaire de permettre l'auto-réparation des lignes de sélection de rangée qui seraient ouvertes, dû à un défaut de fabrication. Pour améliorer la transmission du signal, on peut aussi prévoir de connecter le bus de stockage à la ligne de sélection de rangée précédente, au niveau de chaque électrode pixel. On compense alors les effets de la résistance d'accès élevée des bus de stockage, due au matériau utilisé, dans le cas d'une coupure ligne.

D'autres avantages et caractéristiques de l'invention apparaîtront plus clairement à la lecture de la description qui suit, faite à titre indicatif et non limitatif de l'invention et en référence aux dessins annexés, dans lesquels :
- la figure 1 montre représente schématiquement une structure de matrice d'éléments pixels avec des bus de capacité de stockage selon l'invention ;
- la figure 2 représente un schéma électrique d'un élément pixel correspondant ;
- la figure 3a illustre un exemple d'implantation des couches de fabrication d'une structure d'une matrice d'éléments pixels selon l'invention, pour un transistor à grille dessous, en vue de dessus ; et
- la figure 3b est une vue en coupe transversale selon un axe Il' de la figure 3a ;
- les figures 3c et 3d sont respectivement des vues de dessus et en coupe pour illustrer une technique de connexion d'un bus de stockage à la ligne de sélection précédente qui peut être utilisée dans invention ;
- la figure 4a illustre un autre exemple d'implantation des couches de fabrication d'une structure d'une matrice d'éléments pixels selon l'invention, pour un transistor à grille dessus, en vue de dessus ; et
- la figure 4b est une vue en coupe transversale correspondante, selon un axe AA';
- les figures 5 et 6 représentent chacune une vue en coupe d'une structure de matrice dans laquelle le bus de stockage selon l'invention est conformé de façon à former une deuxième grille de transistors ;
- la figure 7 montre un exemple d'implantation d'un bus de stockage conformé pour réaliser cette deuxième grille ;
- la figure 8 est un schéma électrique d'un élément pixel correspondant;
- les figures 9 et 10 illustrent des modes de connexion avantageux des bus de capacité de stockage à des lignes de sélection précédentes, déterminées en fonction du mode d'adressage des lignes de sélection de rangées ; et
- la figure 11 illustre les possibilités d'auto-réparation avec un bus de stockage selon invention, connecté au moins à ses deux extrémités à une ligne de sélection de rangée précédente.

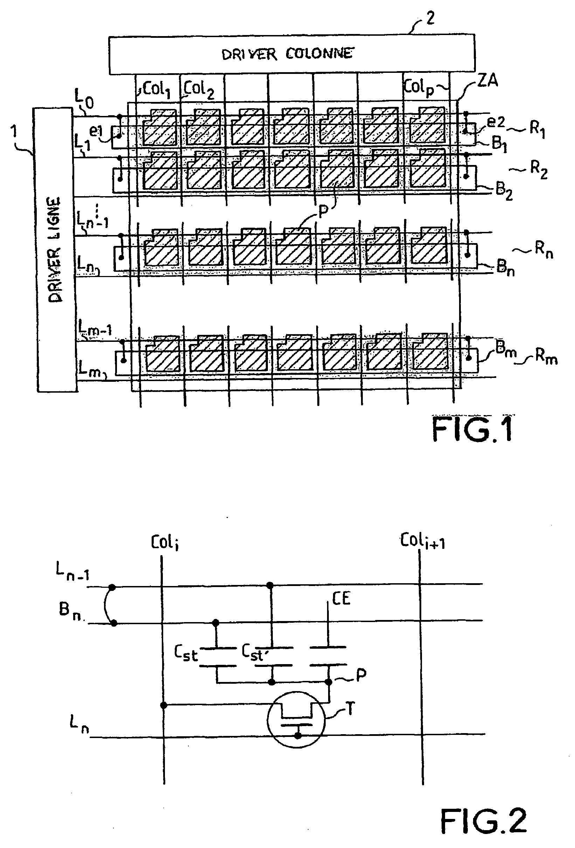

La figure 1 représente schématiquement une matrice active pour écran de visualisation. Des électrodes pixel P sont disposées matriciellement selon un réseau croisé de lignes L₁, ...Lₘ, et de colonnes Col₁, ...Colₚ.

Les lignes sont sélectionnées successivement, et les données d'affichage correspondantes transmises aux électrodes pixel, au moyen de dispositifs de commande (drivers) 1, 2, bien connus de l'homme du métier.

Chaque électrode pixel couvre une grande partie de la surface encadrée par deux lignes et deux colonnes successives. Sur la figure, la rangée Rₙ est encadrée par la ligne de sélection associée, Lₙ, et par la ligne de sélection Lₙ-₁ de la rangée immédiatement précédente.

Selon l'invention, pour chaque rangée d'électrode pixel, un bus de capacité de stockage associé Bₙ, est prévu sous la rangée d'électrode pixel, sensiblement de même largeur.

Ce bus Bₙ est donc disposé parallèlement, entre les deux lignes de sélection Lₙ et Lₙ₋₁. Il est connecté à la ligne de sélection Lₙ₋₁ de la rangée précédente. Dans l'exemple représenté, il est connecté à cette ligne, à l'extérieur de la zone active de la matrice, ZA, par ses deux extrémités.

Ce bus Bₙ forme une capacité de stockage Cst avec chaque électrode pixel P de la rangée Rₙ.

Une ligne de sélection de rangée supplémentaire Lo est prévue pour connecter le bus de capacité de stockage B₁ de la première rangée R₁ d'électrodes pixel de la matrice. Typiquement, cette ligne reçoit le même signal de commande que la dernière rangée Lₘ de la matrice, au moyen d'une connectique adaptée dans le dispositif de commande 1.

Un schéma électrique simplifié de l'élément pixel de la rangée Rₙ et de la colonne Col₁ est représenté sur la figure 2. Dans l'exemple, l'élément pixel comprend une électrode pixel P et un transistor T comme dispositif de commutation.

Le transistor T a sa grille commandée par la ligne Lₙ de sélection de rangée, une électrode, typiquement sa source s, connectée à la colonne Col₁, et une autre électrode, typiquement son drain d, connectée à l'électrode pixel P. Une capacité pixel Cₚᵢₓₑₗ est formée par la structure empilée entre l'électrode pixel P et la contre-électrode CE. Entre l'électrode pixel P et la ligne de sélection Lₙ₋₁ de la rangée précédente, on trouve une capacité de stockage Cst, formée par la structure empilée entre le bus Bₙ et l'électrode pixel P. Dans l'exemple, on a une autre capacité de stockage Cst', négligeable devant la première, due à la portion d'électrode pixel P débordant sur la ligne de sélection Lₙ₋₁ de la rangée précédente, comme on peut le voir sur la figure 1.

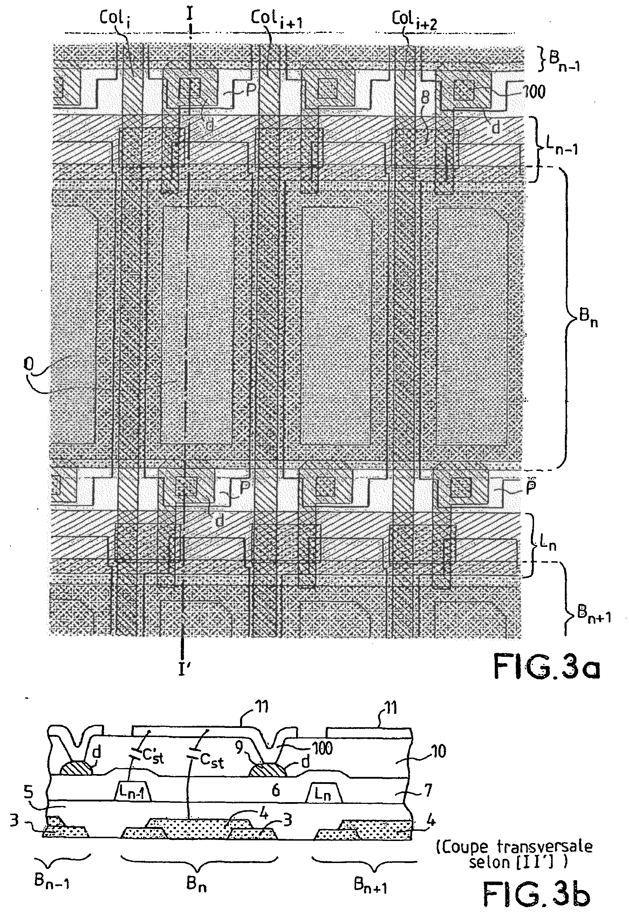

Un exemple de réalisation pratique d'une structure de matrice active à transistors en couches minces, à grille dessous, avec des bus de capacité de stockage selon l'invention, est représenté sur les figures 3a et 3b. La figure 3a montre l'implantation des différentes couches de la structure (vue de dessus). La figure 3b correspond à une vue en coupe transversale selon l'axe Il' représenté sur la figure 3a.

Cet exemple d'implantation correspond à un procédé de fabrication à neuf niveaux de masquage.

Dans une première étape, on réalise un premier dépôt de matériau opaque 3, en général conducteur, pour former des bandes à l'endroit des rangées d'électrodes pixel qui seront réalisées sur un niveau supérieur. Dans ces bandes, des ouvertures O sont formées au niveau de chaque électrode pixel, qui définissent la zone utile de chaque pixel (OAR). Cette première étape correspond au premier niveau de masquage. Le matériau opaque utilisé pour former ces bandes de *Light Shield* est typiquement du titane, avec une épaisseur de couche de l'ordre de 100 nanomètres (nm). On a ainsi un anneau de titane qui permet de masquer les fuites de lumière, notamment les fuites dues aux défauts d'orientation des molécules de cristal liquide (dus au champ électrique ou à la topologie) en périphérie de chaque élément pixel. On améliore ainsi l'OAR.

Dans une deuxième étape, correspondant au deuxième niveau de masquage, on réalise un dépôt de matériau 4 conducteur et transparent, tel que de l'oxyde d'indium et d'étain (de l'ITO, 120 nm d'épaisseur) directement sur le premier niveau, pour former de larges bandes parallèles, à l'endroit des rangées d'électrodes pixel qui seront réalisées sur un niveau supérieur. Les bus de capacité de stockage Bₙ selon l'invention sont ainsi formés, avec dans cette exemple une structure à double couche 3 et 4. Cette structure à double couche permet, outre les gains en OAR dus aux couches 3 de « light shield », de diminuer la résistance par carré du bus Bₙ de capacité de stockage. En effet, si on utilise seulement la couche 4e ITO, la résistance par carré est beaucoup plus élevée. La couche de titane de light shield permet d'abaisser cette résistance.

Puis, on dépose une couche d'isolant, par exemple du SiO₂, sur une épaisseur de 400 nm.

On réalise alors les lignes Lₙ de sélection de rangées, qui forment les grilles des transistors. Le matériau conducteur 6 utilisé est typiquement une double couche titane-molybdène (TiMo). Comme il ressort clairement des figures, chaque bus de stockage Bₙ est encadré par deux lignes de sélection de rangée (métal de grille) Lₙ et Lₙ₋₁. Dans l'exemple, la ligne de sélection Lₙ₋₁ de la rangée précédente d'une rangée déborde sur le bus Bₙ de capacité de stockage de la rangée suivante Rₙ, pour faciliter la connexion du bus à cette rangée.

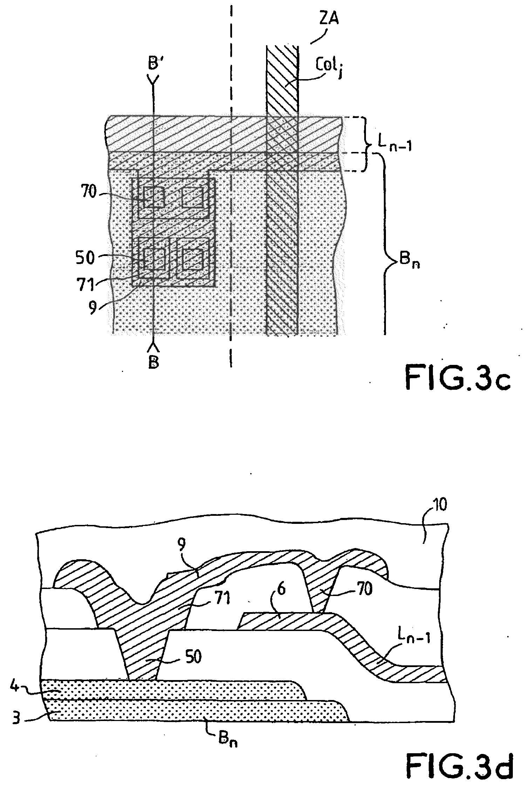

Sur le quatrième niveau de masquage, et comme illustré sur les figures 3c et 3d, on grave la couche 5 d'isolation des bus de capacités de stockage, pour former des ouvertures 50, aux extrémités, à l'extérieur de la zone active (non représenté) en vue de la connexion à réaliser du bus à une ligne de sélection précédente.

Ensuite, de manière habituelle, on procède au dépôt d'une triple couche : isolant de grille 7 (nitrure de silicium, 300nm d'épaisseur), matériau de semi-conducteur (silicium amorphe intrinsèque par exemple) et couche de contact ohmique (silicium amorphe dopé n+ par exemple). On réalise ensuite la délimitation des différents niveaux de façon à former un mesa 8 (figure 3a) de semi-conducteur au-dessus de chaque grille de transistor. On réalise à ce niveau des ouvertures dans l'isolant de grille : des ouvertures 70 au dessus des lignes de sélection et des ouvertures 71 au dessus des ouvertures 50 pour les reprises de contact sur les bus de stockage. C'est le cinquième niveau de masquage.

Sur le sixième niveau, et comme illustré sur les figures 3a et 3b, on forme la couche 9 de conducteur (molybdène) qui définit les colonnes et les électrodes de source et de drain d des transistors, et on utilise les sources et drains comme masques pour créer le canal des transistors.

Sur le septième niveau, on dépose une couche 10 de passivation/isolation, typiquement du nitrure de silicium, et on réalise une ouverture 100, au dessus de chaque drain d, pour permettre la connexion en direct de l'électrode pixel 11, typiquement en ITO, qui est formée sur le huitième niveau.

Un neuvième niveau supplémentaire est en général prévu (non représenté) pour former un plot en matériau opaque, et isolant (*Light Blocking Layer)* pour protéger le canal des transistors de la lumière.

Comme on peut le voir sur les figures, les bus de stockage sont ainsi réalisés sous les rangées d'électrodes pixel, sensiblement avec une même largeur que ces rangées, et ils sont encadrés par deux lignes de sélection de rangée, la ligne de sélection de la rangée associée au bus, et la ligne de sélection précédente.

Sur la figure 3b, on a représenté les capacités de stockage formées entre l'électrode pixel et le bus de capacité de stockage (Cst) et entre l'électrode pixel et la ligne de sélection de la rangée précédente (Cst').

Les figures 3c et 3d illustrent une technique de connexion dite "tricotage", des bus de stockage avec les lignes de sélection. Une telle technique est utilisée lorsque le niveau d'isolant entre les deux couches à connecter est fin, une connexion directe entraînant alors des marches trop raides, avec des risques de cassure.

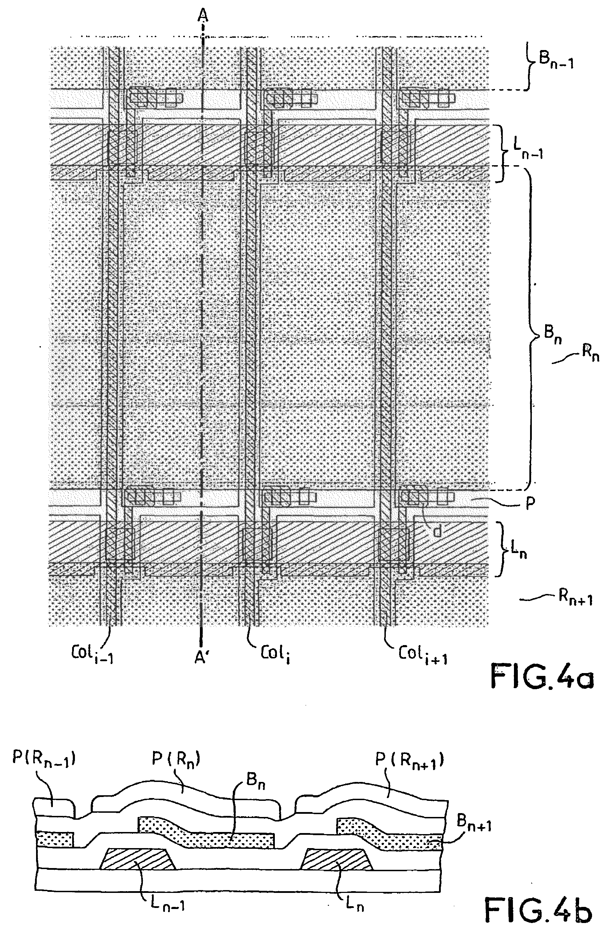

Sur les figures 4a et 4b, on a illustré une variante de réalisation d'une structure de matrice avec un bus de capacité de stockage selon l'invention, combinée avec une structure dite du "shielded pixel".

Le bus de capacité de stockage selon l'invention est ici réalisé sur un niveau de fabrication situé entre les niveaux de fabrication des transistors et le niveau des électrodes pixels, ce qui permet quand le bus de stockage est à un niveau de tension adapté, d'écranter les champs transversaux dus aux capacités parasites planaires. Avec un bus de stockage commandé par une ligne de sélection précédente selon l'invention, et situé sur un tel niveau intermédiaire entre le niveau des électrodes pixel et les niveaux conducteurs des transistors (lignes, colonnes), on bénéficie de cet effet d'écrantage dès lors que la ligne de sélection est non sélectionnée, ce qui est le cas la majeure partie du temps que dure la trame.

Dans l'exemple, les transistors en couches minces sont du type à grille dessus. Dans l'exemple, le bus de capacité de stockage est disposé au-dessus du transistor, entre le niveau de grille de transistor du type à grille dessus et le niveau d'électrode pixel P. Si on prend la figure 4b correspondant à une vue en coupe transversale le long de l'axe AA', les niveaux source/drain, et canal du transistor qui n'apparaissent pas sur cette coupe, sont situés sous le niveau des lignes de sélection (grille).

Selon un autre aspect de l'invention, que l'on peut combiner avec les différents modes de réalisation précédents, on prévoit que le bus de capacité de stockage Bₙ commandé par une ligne de rangée précédente Lₙ₋₁, déborde sur la ligne de sélection Lₙ de la rangée Rₙ, et se situe sur un niveau de la structure de la matrice situé à l'opposé des lignes de sélection de grille par rapport au niveau de canal des transistors. On obtient alors une structure de transistor à double grille, avec une grille principale connectée à la ligne de sélection de la rangée considérée, et une grille auxiliaire connectée à la ligne de sélection de la rangée précédente Lₙ₋₁.

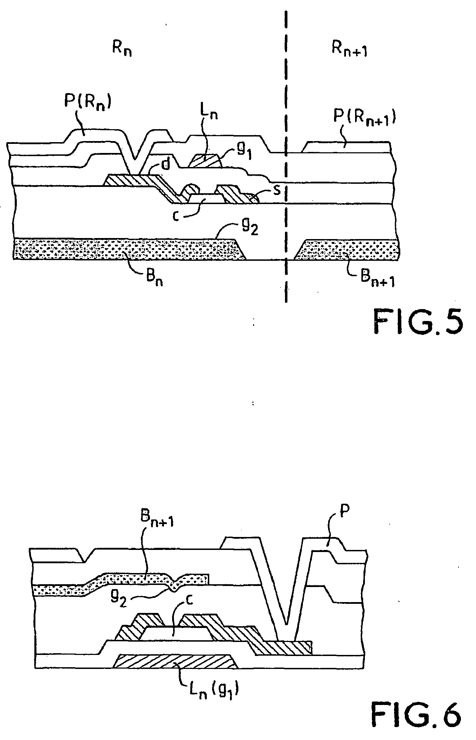

Une structure correspondante de transistor de commutation et son électrode pixel P associée dans une rangée Rₙ de la matrice est illustrée sur la figure 5, dans un exemple de transistor à grille dessus. Le transistor exemple de réalisation d'une deuxième grille des transistors T d'une rangée a une grille principale g1 du transistor, formée par la ligne de sélection Lₙ de la rangée Rₙ dans la portion de cette ligne au-dessus du canal c ; et une grille auxiliaire g2, formée par la portion du bus de capacité de stockage Bₙ, au-dessous dans le cas de la figure 5. Cette deuxième grille g2 est donc commandée par le signal de la rangée Lₙ₋₁.

La figure 6 illustre une autre variante de réalisation d'une deuxième grille qui utilise le bus de capacité de stockage de la rangée suivante : La deuxième grille des transistors T d'une rangée Rₙ, est formée avec le bus de capacité de stockage Bₙ₊₁ de la rangée suivante. Dans l'exemple représenté, sur cette figure, le transistor est du type à grille dessous. La grille principale g1 du transistor est formée par la ligne de sélection Lₙ de la rangée Rₙ dans la portion de cette ligne au-dessus du canal c ; et la grille auxiliaire g2 est formée par la portion du bus de capacité de stockage Bₙ₊₁, au-dessus du canal c. Cette deuxième grille g2 est ici commandée par le signal de la rangée Lₙ.

Les deux variantes de réalisation de la deuxième grille, avec le bus de la rangée (figure 5) ou avec le bus de la rangée suivante (figure 6) s'appliquent chacune aussi bien à des transistors à grille dessous ou dessus.

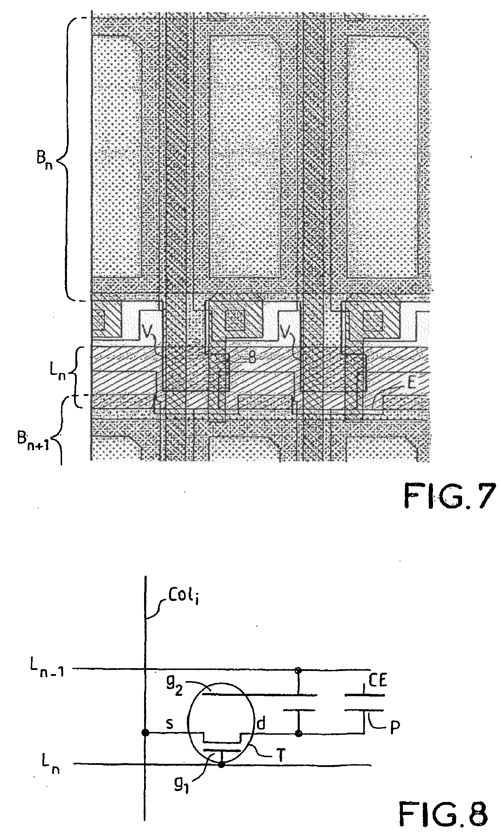

Si on reprend la variante de réalisation de la figure 5, on prévoit, pour réaliser le débordement du bus de capacité de stockage Bₙ sur la ligne de sélection Lₙ de la rangée associée Rₙ, que le bus Bₙ soit conformé pour venir recouvrir en partie au moins la zone de canal de chaque transistor de la rangée Rₙ. Dans l'exemple représenté sur la figure 7, le bus de capacité de stockage Bₙ comporte ainsi une excroissance verticale V vers le bas au niveau de chaque transistor. Cette excroissance a une forme de botte correspondant au mesa 8 (figure 3a), de façon à recouvrir la totalité du canal. Il faut alors prévoir un évidemment correspondant E dans la forme du bus suivant Bₙ₊₁, afin d'éviter les court-circuits entre les deux bus Bₙ et Bₙ₊₁.

On peut éviter ce problème en prévoyant de ne former une grille que sur une partie du canal, par exemple avec une excroissance ne recouvrant recouvrant que la moitié de la longueur du mesa, dans le sens vertical. En contrepartie, les effets de blocage seront moindres, et on aura une moins bonne tenue en tension de la deuxième grille ainsi formée. Dans tous les cas, la forme du bus est déterminée pour tenir compte des désalignements possibles des masques.

Dans le cas de la figure 6, où la deuxième grille est formée avec le bus de capacité de stockage de la rangée suivante, le bus Bₙ₊₁ est par exemple conformé avec une excroissance correspondante à celle montrée sur la figure 7, mais vers le haut. Le bus Bₙ étant éloigné, on n'a pas ici de problème de court-circuit entre les bus Bₙ et Bₙ+₁.

La figure 8 est un schéma électrique correspondant d'un élément pixel à transistor à double grille selon l'invention dans la variante de réalisation illustrée sur les figures 5 et 7.

Un avantage d'une structure à double grille de transistor selon l'invention, est de pouvoir conforter le niveau de blocage de grille des transistors de chaque rangée, tant que la ligne de sélection qui commande le bus de capacité de stockage qui forme la deuxième grille n'est pas sélectionné. La qualité optique est améliorée.

Dans le cas où cette grille est formée avec le bus Bₙ de capacité de stockage de la rangée Rₙ elle-même, et donc commandée par la ligne Lₙ₋₁ de sélection de rangée précédente (figures 5, 7, 8), cette structure de matrice à transistors à double grille permet en outre, de bénéficier d'un effet de précharge de grille, qui améliore le temps d'accès de la matrice. L'effet technique est un début de précharge de grille des transistors de la rangée Rₙ, lorsque la ligne de sélection qui commande le bus de stockage de cette rangée est sélectionnée.

Pour obtenir un tel effet de précharge, il faut cependant tenir compte du mode d'adressage de l'écran dans lequel la matrice va être intégrée. En effet, selon le type d'application considérée, la polarité de la tension appliquée comme signal de sélection sur les grilles des transistors, peut varier de trame en trame et/ou de ligne en ligne. Or on ne peut avoir un effet positif de précharge de grille, que si la ligne de sélection qui commande le bus de capacité de stockage de la rangée considérée est commandée avec la même polarité que la ligne de sélection de cette rangée. Le rang de la rangée précédente à connecter au bus de capacité de stockage de la rangée de rang n dans la matrice, doit alors être déterminé en fonction du mode d'adressage de l'écran de visualisation dans lequel la matrice doit opérer.

Dans le cas où la polarité est inchangée dans une trame, il n'y a pas de problèmes. Ainsi, le bus de capacité de stockage peut être commandé avec la ligne de sélection immédiatement précédente : Bₙ est commandé par Lₙ₋₁, comme décrit précédemment. On a cette même logique de connexion dans le cas où la polarité est seulement inversée de trame en trame : sur une trame, la polarité est positive (+6 volts), sur la trame suivante, la polarité est négative (-6 volts) et ainsi de suite.

En fait, la logique de connexion change dès lors que, la polarité des lignes change au sein même de la trame

On trouve principalement deux modes d'adressage de ce type : le mode inversion ligne, adapté aux écrans couleurs avec une structure de filtres couleurs dite de type *"stripe"* et le mode inversion double ligne, adapté aux écrans couleurs avec une structure de filtres couleurs dite de type "quad".

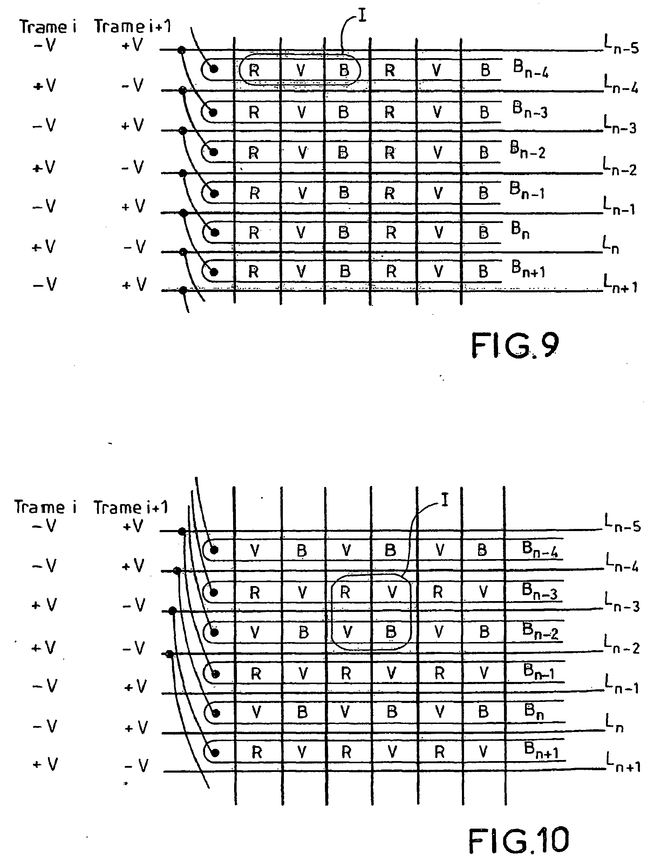

La figure 9 illustre le cas d'une structure de matrice pour une utilisation avec une structure de filtres de type stripe : un point image 1 est défini par trois points élémentaires situés sur la même rangée, chaque point correspondant à une couleur : rouge (R), vert (V), bleu (B).

Pour une telle matrice, on utilise en général un mode d'adressage faisant intervenir une inversion ligne : pendant une trame i, on applique des polarités alternées de ligne en ligne, à la trame suivante, on inverse.

Les lignes de sélection qui reçoivent la même polarité de signal de balayage sont séparées par une ligne.

La figure 10 illustre le cas d'une structure de matrice pour une utilisation avec une structure de filtres de type quad : un point image 1 est défini par quatre points élémentaires alignés sur deux rangées consécutives.

Pour une telle matrice, on utilise en général un mode d'adressage faisant intervenir une inversion double ligne : pendant une trame i, on applique des polarités alternées de deux lignes en deux lignes, à la trame suivante, on inverse, en sorte que tous les points élémentaires d'un même point image aient une même polarité de signal de grille. Il faut raisonner par paires de lignes.

Ainsi, le bus de capacité de stockage Bₙ de la rangée de rang n de la matrice est alors connecté à la ligne de sélection précédente de rang n-4.

On notera que le principe de connexion explicité en relation avec les figures 9 et 10 s'applique aussi si le mode d'adressage fait intervenir une inversion colonne en plus de l'inversion ligne ou double ligne.

Avec les différentes variantes de réalisation d'une structure de matrice selon l'invention, on améliore le rendement de fabrication par le noircissement automatique des éléments pixels en court-circuit avec le bus, 99% du temps de balayage de trame (ie, quand la ligne de sélection qui commande ce bus n'est pas sélectionnée).

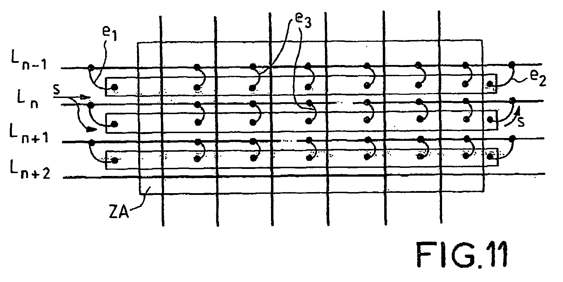

On peut encore améliorer le rendement de fabrication en prévoyant que la connexion des bus de stockage à la ligne de sélection précédente déterminée, soit réalisée à l'extérieur de la zone active de la matrice, aux deux extrémités e1 et e2 du bus de capacité de stockage comme représenté schématiquement sur la figure 11.

En effet, le signal de sélection (ou de balayage) s de la rangée Rₙ₋₁ est alors amené par les deux côtés de la ligne de sélection Lₙ₋₁, d'un côté, par l'application directe sur cette ligne par le dispositif de commande des lignes, et de l'autre, par le bus de capacité de stockage, par son extrémité e2.

Si la ligne de sélection Lₙ₋₁, est ouverte, dû à un défaut de fabrication, ce signal s est cependant amené sur chaque élément pixel de la rangée. On améliore ainsi le rendement de fabrication.

Par ailleurs les court-circuits possibles entre un bus de capacité de stockage et une ligne de sélection ne sont plus gênants dans cette structure, puisque par construction, ils véhiculent le même signal électrique. Ils contribuent plutôt à faire diminuer la résistance d'accès du bus de stockage.

En connectant le bus de capacité de stockage à la ligne de sélection précédente au niveau de chaque électrode pixel, on peut résoudre le cas où la même ligne est ouverte en plusieurs points. On compense aussi les effets de résistance d'accès du bus de capacité de stockage, dû au matériau utilisé, qui n'est pas favorable à une propagation rapide du signal, en cas de coupure de la ligne.

On notera que cette dernière variante de connexion n'est pas applicable facilement dans les cas où la ligne de sélection précédente à laquelle le bus de capacité de stockage doit être connecté n'est pas celle immédiatement précédente : en d'autres termes, dans le cas où l'on souhaite bénéficier des avantages de précharge de grille avec une structure à double grille, en mode d'inversion ligne ou double ligne, on ne connectera pas le bus de capacité de stockage au niveau de chaque électrode pixel, mais seulement à ses extrémités e1 et e2. Dans ce cas, on choisira de préférence la structure double-couche ITO 4 et titane (light shield) 3 comme illustré notamment sur la figure 3b, la faible résistance de la couche 3 en titane permettant d'abaisser la résistance globale du bus.

La structure de matrice selon l'invention, avec ses différentes variantes de réalisation s'applique aux différents types de transistors à couches minces, à silicium amorphe, mono- ou poly-cristallin. Pour les variantes qui ne concernent pas la structure même du transistor, elle s'applique à tout dispositif de commutation utilisé dans le domaine des matrices actives.

Cette structure de matrice s'applique à des écrans de visualisation qui utilisent des cristaux liquides, mais aussi d'autres matériaux ou structures électro-optiques tels que les OLED's.

## Revendications

1. Structure de matrice active pour écran de visualisation, formée sur un substrat transparent, comprenant
des électrodes pixels (P) arrangées en rangées et colonnes,
un dispositif de commutation associé à chaque électrode pixel, et des lignes de sélection de rangée correspondantes, chaque ligne de sélection (Ln) étant disposée entre deux rangées d'électrodes pixel successives (Rn-1, Rn), les lignes de sélection et les électrodes pixel étant réalisées sur un niveau différent dans la structure, **caractérisée en ce que** qu'elle comprend
sous chaque rangée (Rn) d'électrodes pixel, un bus (Bn) en matériau conducteur et transparent, sensiblement de même largeur que ladite rangée, réalisé sur un niveau de la structure séparé du niveau des lignes de sélection (Ln) et du niveau des électrodes pixels (P) par au moins une couche d'isolant et connecté à la ligne de sélection (Ln-1) d'une rangée d'électrodes pixel précédente, ledit bus formant une capacité de stockage (Cst) avec chaque électrode pixel de ladite rangée.

2. Structure de matrice active selon la revendication 1, **caractérisée en ce que** chaque bus (Bn) de capacité de stockage est connecté à une ligne de sélection de rangée (Ln-1) précédente à l'extérieur d'une zone active (ZA) de la matrice, à au moins une extrémité (e1).

3. Structure de matrice active selon la revendication 2, **caractérisée en ce que** chaque bus de capacité de stockage est connecté à ses deux extrémités (e1, e2) à ladite ligne de sélection de rangée précédente, à l'extérieur de la zone active.

4. Structure de matrice active selon la revendication 1, 2 ou 3, **caractérisée en ce que** chaque bus de capacité de stockage est connecté à ladite ligne de sélection de rangée au niveau (e3) de chaque élément pixel de la rangée associée.

5. Structure de matrice active selon l'une quelconque des revendications précédentes, **caractérisée en ce que** les dispositifs de commutation sont des transistors (T), la ligne de sélection d'une rangée (Rn) formant grille (g1) pour chacun des transistors de cette rangée.

6. Structure de matrice active selon la revendication 5, **caractérisée en ce que** le niveau de canal (c) des transistors est situé entre le niveau des bus de capacité de stockage (Bn) et celui des lignes de sélection de rangée formant grille (g1) des transistors (T).

7. Structure de matrice active selon la revendication 6, **caractérisé en ce que** pour chaque transistor d'une rangée, une portion au moins du bus de capacité de stockage (Bn+1) de la rangée suivante chevauche le canal du transistor, ladite portion de bus opérant comme une deuxième grille (g2) pour ledit transistor.

8. Structure de matrice active selon la revendication 6, **caractérisée en ce que** pour chaque transistor d'une rangée, une portion au moins du bus de capacité de stockage (Bn) de la rangée chevauche le canal du transistor, ladite portion de bus opérant comme une deuxième grille (g2) pour ledit transistor.

9. Structure de matrice active selon la revendication 8, **caractérisée en ce que** le bus (Bn) de capacité de stockage d'une rangée (Rn) de rang n dans la matrice est connecté à une ligne de sélection de rangée précédente, le rang de la dite rangée précédente étant déterminé en fonction du mode d'adressage de l'écran de visualisation dans lequel la matrice doit opérer.

10. Structure de matrice active selon la revendication 9, **caractérisée en ce que** pour un mode d'adressage faisant intervenir une inversion ligne, le bus de capacité de stockage de la rangée de rang n est connectée à la ligne de sélection de la rangée de rang n-2.

11. Structure de matrice active selon la revendication 9, **caractérisée en ce que** pour un mode d'adressage faisant intervenir une inversion double-ligne, le bus de capacité de stockage de la rangée de rang n est connectée à la ligne de sélection de la rangée de rang n-4.

12. Structure de matrice active selon l'une quelconque des revendications 5 à 11, pour un transistor du type à grille dessous, **caractérisé en ce que** le bus de capacité de stockage est réalisé sur un niveau disposé au-dessus des niveaux des lignes de sélection et des lignes de données.

13. Structure de matrice active selon l'une quelconque des revendications 5 à 11, pour un transistor du type à grille dessus, **caractérisé en ce que** le bus de capacité de stockage est réalisé sur un niveau disposé au-dessous des niveaux des lignes de sélection et des lignes de données, directement sur un substrat, ou sur un niveau de masque optique.

14. Ecran de visualisation comprenant une structure de matrice active selon l'une quelconque des revendications précédentes 1 à 13.

15. Ecran de visualisation selon la revendication 14, comprenant une structure de matrice active selon l'une quelconque des revendications 5 à 13, **caractérisé en ce que** les lignes de sélection de rangées sont commandées par un signal d'adressage ligne du type impulsionnel à plusieurs niveaux de tension.

16. Procédé de fabrication d'une matrice active pour écran de visualisation, formée sur un substrat transparent, comprenant
des électrodes pixels (P) arrangées en rangées et colonnes,
un dispositif de commutation associé à chaque électrode pixel, et des lignes de sélection de rangée correspondantes, chaque ligne de sélection (Ln) étant disposée entre deux rangées d'électrodes pixel successives (Rn1, Rn), les lignes de sélection et les électrodes pixel étant réalisées sur un niveau différent dans la structure, **caractérisé en ce qu'**il comprend la formation
sous chaque rangée (Rn) d'électrodes pixel, d'un bus (Bn) en matériau conducteur et transparent, sensiblement de même largeur que ladite rangée, réalisé sur un niveau de la structure séparé du niveau des lignes de sélection (Ln) et du niveau des électrodes pixels (P) par au moins une couche d'isolant et connecté à la ligne de sélection (Ln-1) d'une rangée d'électrodes pixel précédente, ledit bus formant une capacité de stockage (Cst) avec chaque électrode pixel de ladite rangée.

17. Procédé de fabrication d'une matrice active selon la revendication 16 dans laquelle les dispositifs de commutation sont des transistors (T), la ligne de sélection d'une rangée (Rn) formant grille (g1) pour chacun des transistors de cette rangée, **caractérisé en ce que** le bus de capacité de stockage est réalisé sur un niveau situé entre les niveaux de fabrication des transistors et le niveau des électrodes pixels.

## Patentansprüche

1. Aktivmatrixstruktur für einen Anzeigeschirm, welche auf einem transparenten Substrat gebildet ist und Folgendes umfasst:
- zeilen- und spaltenweise angeordnete Pixelelektroden (P),
- eine Schaltvorrichtung, die jeder Pixelelektrode zugeordnet ist, und entsprechende Zeilenauswahllinien, wobei jede Auswahllinie (Ln) zwischen zwei aufeinanderfolgenden Pixelelektrodenzeilen (Rn-1, Rn) angeordnet ist, wobei die Auswahllinien und die Pixelelektroden in einer unterschiedlichen Ebene in der Struktur ausgebildet sind, **dadurch gekennzeichnet, dass** sie Folgendes umfasst:
- unter jeder Pixelelektrodenzeile (Rn) einen Bus (Bn) aus einem leitenden und durchsichtigen Material, welcher im Wesentlichen gleich breit ist wie die Zeile, in einer Strukturebene ausgebildet ist, die von der Ebene der Auswahllinien (Ln) und der Ebene der Pixelelektroden (P) durch mindestens eine Schicht aus Isoliermaterial getrennt ist, und welcher mit der Auswahllinie (Ln-1) einer vorangehenden Pixelelektrodenzeile verbunden ist, wobei der Bus eine Speicherkapazität (Cst) mit jeder Pixelelektrode der Zeile bildet.

2. Aktivmatrixstruktur nach Anspruch 1, **dadurch gekennzeichnet, dass** jeder Speicherkapazitätsbus (Bn) an mindestens einem Ende (e1) mit einer vorangehenden Zeilenauswahllinie (Ln-1) außerhalb einer aktiven Zone (ZA) der Matrix verbunden ist.

3. Aktivmatrixstruktur nach Anspruch 2, **dadurch gekennzeichnet, dass** jeder Speicherkapazitätsbus an seinen beiden Enden (e1, e2) mit der vorangehenden Zeilenauswahllinie außerhalb der aktiven Zone verbunden ist.

4. Aktivmatrixstruktur nach Anspruch 1, 2 oder 3, **dadurch gekennzeichnet, dass** jeder Speicherkapazitätsbus mit der Zeilenauswahllinie an (e3) jedem Pixelelement der zugeordneten Zeile verbunden ist.

5. Aktivmatrixstruktur nach einem beliebigen der vorhergehenden Ansprüche, **dadurch gekennzeichnet, dass** die Schaltvorrichtungen Transistoren (T) sind, wobei die Linie zur Auswahl einer Zeile (Rn) ein Array (g1) für die jeweiligen Transistoren dieser Zeile bildet.

6. Aktivmatrixstruktur nach Anspruch 5, **dadurch gekennzeichnet, dass** die Kanalebene (c) der Transistoren sich zwischen der Ebene der Speicherkapatizätsbussen (Bn) und derjenigen der ein Array (g1) der Transistoren (T) bildenden Zeilenauswahllinien befindet.

7. Aktivmatrixstruktur nach Anspruch 6, **dadurch gekennzeichnet, dass** für jeden Transistor einer Zeile mindestens ein Abschnitt des Speicherkapazitätsbusses (Bn+1) der nachfolgenden Zeile sich mit dem Transistorkanal überlagert, wobei der Busabschnitt wie ein zweites Array (g2) für den Transistor wirkt.

8. Aktivmatrixstruktur nach Anspruch 6, **dadurch gekennzeichnet, dass** für jeden Transistor einer Zeile mindestens ein Abschnitt des Speicherkapazitätsbusses (Bn) der Zeile sich mit dem Transistorkanal überlagert, wobei der Busabschnitt wie ein zweites Array (g2) für den Transistor wirkt.

9. Aktivmatrixstruktur nach Anspruch 8, **dadurch gekennzeichnet, dass** der Speicherkapazitätsbus (Bn) einer Zeile (Rn) von Rang n in der Matrix mit einer vorhergehenden Zeilenauswahllinie verbunden ist, wobei der Rang der vorhergehenden Zeile in Abhängigkeit von dem Adressiermodus des Anzeigeschirms bestimmt wird, in dem die Matrix arbeiten muss.

10. Aktivmatrixstruktur nach Anspruch 9, **dadurch gekennzeichnet, dass** bei einem Adressiermodus mit einer Linieninversion der Speicherkapazitätsbus der Zeile von Rang n mit der Auswahllinie von Rang n-2 verbunden ist.

11. Aktivmatrixstruktur nach Anspruch 9, **dadurch gekennzeichnet, dass** bei einem Adressiermodus mit einer Doppellinieninversion der Speicherkapazitätsbus der Zeile von Rang n mit der Auswahllinie von Rang n-4 verbunden ist.

12. Aktivmatrixstruktur nach einem beliebigen der Ansprüche 5 bis 11 für einen Transistor des Typs "below the gate", **dadurch gekennzeichnet, dass** der Speicherkapazitätsbus auf einer Ebene ausgebildet ist, die über den Ebenen der Auswahllinien und der Datenlinien angeordnet ist.

13. Aktivmatrixstruktur nach einem beliebigen der Ansprüche 5 bis 11 für einen Transistor des Typs "top gate", **dadurch gekennzeichnet, dass** der Speicherkapazitätsbus auf einer Ebene ausgebildet ist, der unter den Ebenen der Auswahllinien und der Datenlinien unmittelbar auf einem Substrat oder auf einer Ebene einer optischen Maske angeordnet ist.

14. Anzeigeschirm mit einer Aktivmatrixstruktur nach einem beliebigen der vorhergehenden Ansprüche 1 bis 13.

15. Anzeigeschirm nach Anspruch 14, umfassend eine Aktivmatrixstruktur nach einem beliebigen der vorhergehenden Ansprüche 5 bis 13, **dadurch gekennzeichnet, dass** die Zeilenauswahllinien durch ein Linienadressiersignal des Typs Impulssignal mit mehreren Spannungsebenen gesteuert werden.

16. Verfahren zur Herstellung einer Aktivmatrix für Anzeigeschirm, welche auf einem transparenten Substrat ausgebildet ist, umfassend
- zeilen- und spaltenweise angeordnete Pixelelektroden (P),
- eine Schaltvorrichtung, die jeder Pixelelektrode zugeordnet ist, und entsprechende Zeilenauswahllinien, wobei jede Auswahllinie (Ln) zwischen zwei aufeinanderfolgenden Pixelelektrodenzeilen (Rn1, Rn) angeordnet ist, wobei die Auswahllinien und die Pixelelektroden in einer unterschiedlichen Ebene in der Struktur ausgebildet sind, **dadurch gekennzeichnet, dass** es Folgendes umfasst:
- unter jeder Pixelelektrodenzeile (Rn) Bildung eines Busses (Bn) aus einem leitenden und durchsichtigen Material, welcher im Wesentlichen gleich breit ist wie die Zeile, in einer Strukturebene ausgebildet ist, die von der Ebene der Auswahllinien (Ln) und der Ebene der Pixelelektroden (P) durch mindestens eine Schicht aus Isoliermaterial getrennt ist, und welcher mit der Auswahllinie (Ln-1) einer vorangehenden Pixelelektrodenzeile verbunden ist, wobei der Bus eine Speicherkapazität (Cst) mit jeder Pixelelektrode der Zeile bildet.

17. Verfahren zur Herstellung einer Aktivmatrix nach Anspruch 16, bei der die Schaltvorrichtungen Transistoren (T) sind, wobei die Linie für die Auswahl einer Zeile (Rn) ein Array (g1) für die jeweiligen Transistoren dieser Zeile bildet, **dadurch gekennzeichnet, dass** der Speicherkapazitätsbus auf einer Ebene zwischen den Ebenen für die Transistorenherstellung und der Ebene der Pixelelektroden ausgebildet ist.

## Claims

1. Active matrix structure for display screen, formed on a transparent substrate, comprising
pixel electrodes (P) arranged in rows and columns,
a switching device associated with each pixel electrode, and corresponding row selection lines, each selection line (Ln) being disposed between two successive rows of pixel electrodes (Rn-1, Rn), the selection lines and the pixels electrodes being implemented on a different level in the structure, **characterised in that** it comprises
under each row (Rn) of pixel electrodes, a bus (Bn) made of conductive and transparent material, substantially of the same width as said row, implemented on a level of the structure separated from the level of the selection lines (Ln) and from the level of the pixel electrodes (P) by at least one layer of insulating material and connected to the selection line (Ln-1) of a previous row of pixel electrodes, said bus forming a storage capacitor (Cst) with each pixel electrode of said row.

2. Active matrix structure according to claim 1, **characterised in that** each storage capacitor bus (Bn) is connected to a previous row selection line (Ln-1) outside an active zone (ZA) of the matrix, at at least one end (e1).

3. Active matrix structure according to claim 2, **characterised in that** each storage capacitor bus is connected at its two ends (e1, e2) to said previous row selection line, outside the active zone.

4. Active matrix structure according to claim 1, 2 or 3, **characterised in that** each storage capacitor bus is connected to said row selection line at the level (e3) of each pixel element of the associated row.

5. Active matrix structure according to any one of the preceding claims, **characterised in that** the switching devices are transistors (T), the selection line of a row (Rn) forming a gate (g1) for each of the transistors of this row.

6. Active matrix structure according to claim 5, **characterised in that** the channel level (c) of the transistors is situated between the level of the storage capacitor buses (Bn) and that of the row selection lines forming a gate (g1) of the transistors (T).

7. Active matrix structure according to claim 6, **characterised in that** for each transistor of a row, a portion at least of the storage capacitor bus (Bn+1) of the next row overlaps the channel of the transistor, said portion of bus operating as a second gate (g2) for said transistor.

8. Active matrix structure according to claim 6, **characterised in that** for each transistor of a row, a portion at least of the storage capacitor bus (Bn) of the row overlaps the channel of the transistor, said portion of bus operating as a second gate (g2) for said transistor.

9. Active matrix structure according to claim 8, **characterised in that** the storage capacitor bus (Bn) of a row (Rn) of rank n in the matrix is connected to a previous row selection line, the rank of said previous row being determined according to the addressing mode of the display screen in which the matrix must operate.

10. Active matrix structure according to claim 9, **characterised in that** for an addressing mode implementing a line inversion, the storage capacitor bus of the row of rank n is connected to the selection line of the row of rank n-2.

11. Active matrix structure according to claim 9, **characterised in that** for an addressing mode implementing a double-line inversion, the storage capacitor bus of the row of rank n is connected to the selection line of the row of rank n-4.

12. Active matrix structure according to any one of claims 5 to 11, for a transistor of bottom-gate type, **characterised in that** the storage capacitor bus is implemented on a level disposed above the levels of the selection lines and the data lines.

13. Active matrix structure according to any one of claims 5 to 11, for a transistor of top-gate type, **characterised in that** the storage capacitor bus is implemented on a level disposed below the levels of the selection lines and the data lines, directly on a substrate, or on an optical mask level.

14. Display screen comprising an active matrix structure according to any one of the preceding claims 1 to 13.

15. Display screen according to claim 14, comprising an active matrix structure according to any one of claims 5 to 13, **characterised in that** the row selection lines are driven by a line addressing signal of pulse type with several voltage levels.

16. Method for manufacturing an active matrix for a display screen, formed on a transparent substrate, comprising
pixel electrodes (P) arranged in rows and columns,
a switching device associated with each pixel electrode, and corresponding row selection lines, each selection line (Ln) being disposed between two successive rows of pixel electrodes (Rn-1, Rn), the selection lines and the pixels electrodes being implemented on a different level in the structure, **characterised in that** it comprises the formation
under each row (Rn) of pixel electrodes, of a bus (Bn) made of conductive and transparent material, substantially of the same width as said row, implemented on a level of the structure separated from the level of the selection lines (Ln) and from the level of the pixel electrodes (P) by at least one layer of insulating material and connected to the selection line (Ln-1) of a previous row of pixel electrodes, said bus forming a storage capacitor (Cst) with each pixel electrode of said row.

17. Method for manufacturing an active matrix according to claim 16 wherein the switching devices are transistors (T), the selection line of a row (Rn) forming a gate (g1) for each of the transistors of this row, **characterised in that** the storage capacitor bus is implemented on a level situated between the levels of manufacture of the transistors and the level of the pixel electrodes.
